# EUROPEAN PATENT APPLICATION

(11) **EP 4 752 464 A1**
(43) Date of publication of application: **03.06.2026**
(21) Application number: 24825361.9
(22) Date of filing: 19.08.2024
(51) Int. Cl.: F25B 41/35, F16K 31/50, F16K 31/04, F16K 31/02, F16K 1/32

(54) **ELECTRONIC EXPANSION VALVE**

(30) Priority: 19.06.2023 CN 202321595997 U; 30.11.2023 CN 202311631561; 30.11.2023 CN 202311633139; 30.11.2023 CN 202323273080 U; 30.11.2023 CN 202323270079 U
(71) Applicant: Zhejiang Dunan Artificial Environment Co., Ltd., Shaoxing Zhejiang 311835 (CN)
(72) Inventor: YANG, Zhongyu, Shaoxing, Zhejiang 311835 (CN); CAI, Peiyu, Shaoxing, Zhejiang 311835 (CN)
(74) Representative: Meyer-Dulheuer MD Legal Patentanwälte PartG mbB
(86) International application number: PCT/CN2024/113173
(87) International publication number: WO 2024/260477

(57) **Abstract**

An electronic expansion valve is provided. The electronic expansion valve includes a stop seat (510), a rotor assembly (100), a screw rod (200), and a valve seat assembly (400). The valve seat assembly (400) is provided with a valve port portion (410). The electronic expansion valve further includes a first elastic member (610). An end of the first elastic member (610) is directly or indirectly connected to the stop seat (510), and an other end of the first elastic member (610) is directly or indirectly connected to the screw rod (200). When the screw rod (200) moves along a direction from the valve port portion (410) to the rotor assembly (100), the first elastic member (610) is configured to generate an elastic pre-tightening force on the screw rod (200) along a direction from the rotor assembly (100) to the valve port portion (410).

## Description

### CROSS-REFERENCE TO RELATED APPLICATIONS

This application claims priority to Chinese patent application No. 202321595997.0, filed on June 19, 2023, and titled "ELECTRONIC EXPANSION VALVE", Chinese patent application No. 202311631561.7, filed on November 30, 2023, and titled "ELECTRONIC EXPANSION VALVE", Chinese patent application No. 202311633139.5, filed on November 30, 2023, and titled "ELECTRONIC EXPANSION VALVE", Chinese patent application 202323273080.1, filed on November 30, 2023, and titled "ELECTRONIC EXPANSION VALVE", and Chinese patent application No. 202323270079.3, filed on November 30, 2023, and titled "ELECTRONIC EXPANSION VALVE". The content of the above identified applications are hereby incorporated herein in their entireties by reference.

### TECHNICAL FIELD

The present disclosure relates to the technical field of valve bodies, and in particular, to an electronic expansion valve.

### BACKGROUND

As a new type of control element, an electronic expansion valve has long transcended a concept of a throttling mechanism, The electronic expansion valve is not only a crucial part of an intelligent refrigeration system, but also an important means and guarantee for truly realizing optimization of the refrigeration system. As a symbol of a mechatronics integration of the refrigeration system, the electronic expansion valve has been applied in an increasing number of fields.

When a valve core abuts against a valve port portion, the electronic expansion valve is in a closed state. At this time, if the valve core does not have sufficient pre-tightening force to close the valve port portion, it is impossible to ensure good sealing between the valve core and the valve port portion, resulting in leakage of the electronic expansion valve.

### SUMMARY

According to various embodiments of the present disclosure, an electronic expansion valve is provided to solve the problem of leakage of the electronic expansion valve caused by easy loosening between a valve core and a valve port portion.

The present disclosure provides an electronic expansion valve. The electronic expansion valve includes a stop seat, a rotor assembly, a screw rod, and a valve seat assembly. The valve seat assembly is provided with a valve port portion. The electronic expansion valve further includes a first elastic member. An end of the first elastic member is directly or indirectly connected to the stop seat, and an other end of the first elastic member is directly or indirectly connected to the screw rod. When the screw rod moves along a direction from the valve port portion to the rotor assembly, the first elastic member is configured to generate an elastic pre-tightening force on the screw rod along a direction from the rotor assembly to the valve port portion.

In an embodiment, the electronic expansion valve further include a first restricting member and a second restricting member. One of the first restricting member and the second restricting member is fixed to the stop seat, and another one of the first restricting member and the second restricting member is fixed to the screw rod.

In an embodiment, the first elastic member is a compression spring, and the first elastic member is sleeved on the screw rod.

In an embodiment, the first restricting member is fixed to an inner wall of the stop seat. The second restricting member is fixed to an outer wall of the screw rod. An end of the first elastic member away from the valve port portion abuts against the first restricting member, and an other end of the first elastic member adjacent to the valve port portion abuts against the second restricting member.

In an embodiment, the outer wall of the screw rod is provided with a first rod body step, and the first rod body step is defined as the second restricting member.

In an embodiment, the inner wall of the stop seat is provided with a first seat body step. A side of the stop seat away from the valve port portion is provided with a first stopping portion. The first restricting member is disposed between the first stopping portion and the first seat body step.

In an embodiment, a top portion of the stop seat is provided with a first connecting insert member, and the first stopping portion is connected to the first connecting insert member.

In an embodiment, the first restricting member is fixed to an outer wall of the screw rod, and the second restricting member is fixed to an inner wall of the stop seat. An end of the first elastic member adjacent to the valve port portion abuts against the first restricting member, and an other end of the first elastic member away from the valve port portion abuts against the second restricting member.

In an embodiment, the electronic expansion valve further include a restricting collar. The restricting collar is fixed to and sleeved on the screw rod, and the restricting collar is stopped by an end of the first restricting member away from the valve port portion. The inner wall of the stop seat is provided with a first seat body step, and the first restricting member is disposed between the restricting collar and the first seat body step.

In an embodiment, a side of the stop seat away from the valve port portion is provided with a first stopping portion, and the first stopping portion is defined as the second restricting member.

In an embodiment, a top portion of the stop seat is provided with a first connecting insert member, and the first stopping portion is connected to the first connecting insert member.

In an embodiment, the electronic expansion valve further include a valve core assembly and a stop ring. The stop seat is further provided with a second stopping portion. When the stop ring is stopped by the second stopping portion, the valve core assembly abuts against the valve port portion and closes the valve port portion.

In an embodiment, the electronic expansion valve further include a valve core assembly. The valve core assembly includes a sliding nut and a valve needle assembly. The sliding nut includes a main body portion and a connecting portion. The main body portion is configured as an injection-molded member, and the sliding nut is configured to cooperate with the stop seat or the valve seat assembly via the main body portion. An end of the connecting portion is fixed to the main body portion, and an other end of the connecting portion is connected to the valve needle assembly.

In an embodiment, the electronic expansion valve further include a stopping structure. The stopping structure is disposed on an inner wall of the stop seat, and configured to abut against a side portion of the screw rod to prevent the screw rod from moving along a direction from the rotor assembly to the valve port portion. An end of the first elastic member adjacent to the valve port portion abuts against the screw rod, and an other end of the first elastic member away from the valve port portion abuts against the stop seat. In addition, the first elastic member is in a compressed state. When the screw rod moves along the direction from the valve port portion to the rotor assembly, the first elastic member in the compressed state is configured to generate an elastic stopping force on the screw rod along the direction from the rotor assembly to the valve port portion.

In an embodiment, the electronic expansion valve further include a restricting collar. The restricting collar is fixed to and sleeved on the screw rod. The stopping structure includes a first restricting member. An end of the first restricting member is fixedly disposed on the inner wall of the stop seat, and an other end of the first restricting member extend along a radial direction of the stop seat towards the screw rod. The first restricting member is stopped by an end of the restricting collar adjacent to the valve port portion. An end of the first elastic member away from the valve port portion is stopped by the first restricting member, and an other end of the first elastic member adjacent to the valve port portion is stopped by an outer wall of the screw rod.

In an embodiment, the stopping structure further includes a first seat body step disposed on the inner wall of the stop seat, and the first seat body step is stopped by an end of the first restricting member adjacent to the valve port portion.

In an embodiment, the outer wall of the screw rod is provided with a first rod body step. An end of the first elastic member abuts against the first rod body step, and an other end of the first elastic member abuts against the first restricting member.

In an embodiment, the rotor assembly includes a magnetic rotor and a connecting member. The magnetic rotor is sleeved on the stop seat and fixed to an end of the screw rod away from the valve port portion via the connecting member. The restricting collar is clamped between the first restricting member and the connecting member.

In an embodiment, the first restricting member is configured as a bearing member. In addition, an outer ring of a bearing of the first restricting member is fixed to the inner wall of the stop seat, and an inner ring of the bearing of the first restricting member is movably sleeved on the outer wall of the screw rod. The screw rod is in guiding cooperation with the inner ring of the bearing of the first restricting member.

In an embodiment, a first restricting member is fixed to and sleeved on an outer wall of the screw rod. The stopping structure includes a second seat body step disposed on the inner wall of the stop seat. The second seat body step is stopped by an end of the first restricting member adjacent to the valve port portion to prevent the screw rod from moving towards the valve port portion. An end of the stop seat away from the valve port portion is provided with a first stopping portion. An end of the first elastic member adjacent to the valve port portion is stopped by the first restricting member, and an other end of the first elastic member away from the valve port portion is stopped by the first stopping portion.

In an embodiment, the electronic expansion valve further include a restricting collar. The restricting collar is fixed to and sleeved on the screw rod, the outer wall of the screw rod is further provided with a third rod body step, and the first restricting member is fixedly clamped between the restricting collar and the third rod body step.

In an embodiment, he first restricting member is configured as a bearing member. An inner ring of a bearing of the first restricting member is fixed to the outer wall of the screw rod, and an outer ring of the bearing of the first restricting member is in guiding cooperation with the inner wall of the stop seat.

In an embodiment, the electronic expansion valve further includes a first restricting member. The first restricting member is configured as a bearing member. An outer ring of a bearing of the first restricting member is restricted by an inner wall of the stop seat, and an inner ring of the bearing of the first restricting member is stopped by an outer wall of the screw rod to prevent the screw rod from moving towards the valve port portion. An end of the first elastic member adjacent to the valve port portion abuts against the screw rod, and an other end of the first elastic member away from the valve port portion abuts against the inner ring of the bearing of the first restricting member.

In an embodiment, an end of the stop seat away from the valve port portion is provided with a first stopping portion, and the outer ring of the bearing of the first restricting member is embedded between the first stopping portion and the stop seat.

In an embodiment, the stop seat includes a stop main body and a first connecting insert member. The stop main body is configured as an injection-molded member. An end of the first connecting insert member is embedded in the stop main body, and an other end of the first connecting insert member is connected to the first stopping portion by welding.

In an embodiment, the stop seat further includes a second connecting insert member. An end of the second connecting insert member is embedded in the stop main body, and an other end of the second connecting insert member is connected to the valve seat assembly by welding.

In an embodiment, the electronic expansion valve further include a first restricting member. The first restricting member is configured as a bearing member. An inner ring of a bearing of the first restricting member is fixed to an outer wall of the screw rod, and an outer ring of the bearing of the first restricting member is stopped by an inner wall of the stop seat to prevent the screw rod from moving towards the valve port portion. An end of the first elastic member adjacent to the valve port portion abuts against the outer ring of the bearing of the first restricting member, and an other end of the first elastic member away from the valve port portion is directly or indirectly stopped by the inner wall of the stop seat.

In an embodiment, a side of the stop seat away from the valve port portion is provided with a first stopping portion, and the first stopping portion is defined as a second restricting member. Alternatively, the first stopping portion includes an annular-shaped fixing ring. An inner circumference of the annular-shaped fixing ring surrounds a peripheral side of the screw rod, and an outer ring of the annular-shaped fixing ring is fixed to the inner wall of the stop seat.

In an embodiment, the stop seat includes a stop main body and a first connecting insert member. The stop main body is configured as an injection-molded member. An end of the first connecting insert member is embedded in the stop main body, and an other end of the first connecting insert member is connected to the annular-shaped fixing ring by welding.

Compared to the related art, during normal operation of the screw rod, the screw rod and the rotor assembly are supported by the stop seat, the screw rod rotates in place with the rotor assembly, and the screw rod does not move along the axial direction. When the screw rod drives the valve core assembly to close the valve port portion, the rotor assembly continues to rotate, and the screw rod continues to rotate relative to the valve core assembly. However, since the valve core assembly has already abutted against the valve port portion, the valve core assembly cannot continue to move towards the valve port portion. At this time, under the impetus of the reaction force, the screw rod moves along a direction away from the valve port portion. In addition, the first elastic member is clamped between the screw rod and the stop seat, and the first elastic member is configured as the compression elastic member. Therefore, during the movement of the screw rod away from the valve port portion, the first elastic member continues to be compressed by the screw rod. At this time, the first elastic member in turn applies an acting force on the screw rod towards the valve port portion, thereby increasing the pressing force of the valve core assembly against the valve port portion, achieving the pre-tightening effect on the valve port portion, and preventing leakage between the valve core assembly and the valve port portion.

### BRIEF DESCRIPTION OF THE DRAWINGS

To more clearly illustrate the technical solutions in the embodiments of the present disclosure or in the conventional technology, the accompanying drawings used in the description of the embodiments or the conventional technology will be briefly introduced below. The drawings in the following description are only some embodiments of the present disclosure. For those skilled in the art, other drawings may also be derived from these drawings without creative efforts.
FIG. 1 is a schematic partial structural view of an electronic expansion valve according to an embodiment of the present disclosure.
FIG. 2 is a cross-sectional view of an electronic expansion valve according to an embodiment of the present disclosure.
FIG. 3 is a cross-sectional view of an electronic expansion valve according to another embodiment of the present disclosure.
FIG. 4 is a cross-sectional view of an electronic expansion valve according to another embodiment of the present disclosure.
FIG. 5 is a schematic partial structural view of an electronic expansion valve according to an embodiment of the present disclosure.

In the drawings, 100 represents a rotor assembly; 110 represents a magnetic rotor; 120 represents a connecting member; 200 represents a screw rod; 210 represents a restricting collar; 220 represents a first restricting member; 230 represents a second restricting member; 240 represents a first rod body step; 250 represents a second rod body step; 260 represents a third rod body step; 300 represents a valve core assembly; 310 represents a sliding nut; 314 represents a main body portion; 315 represents a connecting portion; 320 represents a valve needle assembly; 321 represents a first valve needle; 322 represents a second valve needle; 3221 represents a regulating valve port; 400 represents a valve seat assembly; 410 represents a valve port portion; 510 represents a stop seat; 511 represents an external threaded portion; 5101 represents a first mating portion; 5102 represents a second mating portion; 512 represents a stop main body; 513 represents a first connecting insert member; 514 represents a second connecting insert member; 518 represents a first seat body step; 519 represents a second seat body step; 520 represents a stop ring; 530 represents a guide rod; 540 represents a first stopping portion; 541 represents an annular-shaped fixing ring; 542 represents a stopping rib; 550 represents a second stopping portion; 610 represents a first elastic member; and 800 represents a housing.

### DETAILED DESCRIPTION

The technical solutions in the embodiments of the present disclosure will be described clearly and completely with reference to the accompanying drawings in the embodiments of the present disclosure. The embodiments as described are merely some rather than all of the embodiments of the present disclosure. All other embodiments obtained by those skilled in the art on the basis of the embodiments in the present disclosure without involving any inventive effort fall within the protection scope of the present disclosure.

In the description of the present disclosure, it should be understood that orientations or positional relationships indicated by terms such as "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the orientations or positional relationships shown in the drawings, which are merely for the convenience of describing the present disclosure and simplifying the description, and do not indicate or imply that the referred apparatus or element must have a specific orientation, be constructed and operated in a specific orientation, and thus cannot be understood as a limitation on the present disclosure.

In addition, terms such as "first" and "second" are merely used for descriptive purposes, and cannot be understood as indicating or implying relative importance or implicitly indicating the quantity of the technical features referred to. Thus, a feature defined with "first" and "second" may explicitly or implicitly include at least one of features. In the description of the present disclosure, "a plurality of" means at least two, for example, two, three, and the like, unless specifically defined otherwise.

In the present disclosure, unless otherwise specified and defined, terms such as "mounted", "connected", "coupling", and "fixed" should be understood broadly, for example, may be a fixed connection, a detachable connection, or an integral connection; a mechanical connection, or an electrical connection; a direct connection, or an indirect connection through an intermediate medium; or an internal communication between two elements or an interaction relationship between two elements, unless otherwise specified. For those skilled in the art, specific meanings of the foregoing terms in the present disclosure may be understood according to specific situations.

In the present disclosure, unless otherwise explicitly specified and defined, a first feature being "on" or "under" a second feature may refer to the first feature and the second feature being in direct contact, or in indirect contact through an intermediary. Also, when the first feature is described as "on", "above", and "over" the second feature, this may mean the first feature is directly above or obliquely above the second feature, or merely indicate that the first feature is horizontally higher than the second feature. When the first feature is described as "under", "below", and "beneath" the second feature, this may mean the first feature is directly below or obliquely below the second feature, or merely indicate that the first feature is horizontally lower than the second feature.

It should be noted that when an element is referred to as being "fixed to" or "provided on" another element, the element may be directly on the another element or an intermediate element may also exist. When an element is considered as being "connected to" another element, the element may be directly connected to the another element or an intermediate element may also exist at the same time. Terms such as "vertical", "horizontal", "upper", "lower", "left", "right", and other similar expressions used in the description of the present disclosure are only for the purpose of illustration and do not represent the unique implementation.

Unless otherwise defined, all technical and scientific terms used herein have the same meaning as commonly understood by those skilled in the art to which the present disclosure belongs. The terms used herein in the description of the present disclosure are for the purpose of describing specific embodiments only, and are not intended to limit the present disclosure. As used herein, the term "and/or" means any and all combinations of one or more of the associated listed items.

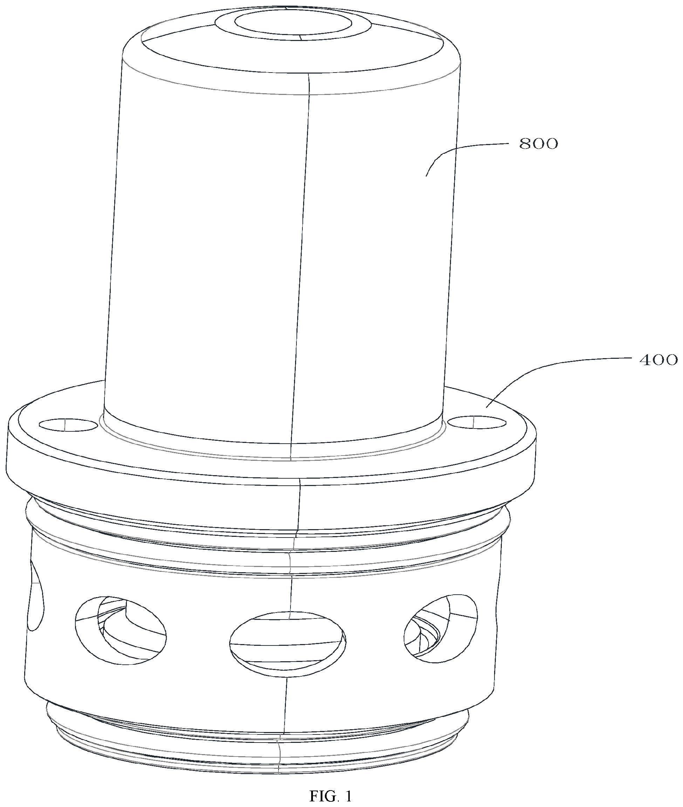

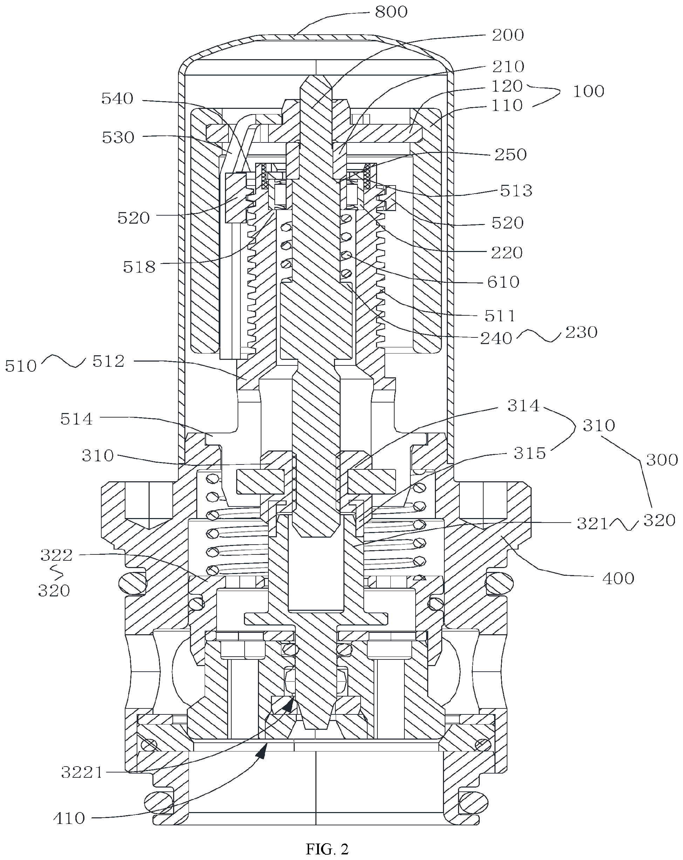

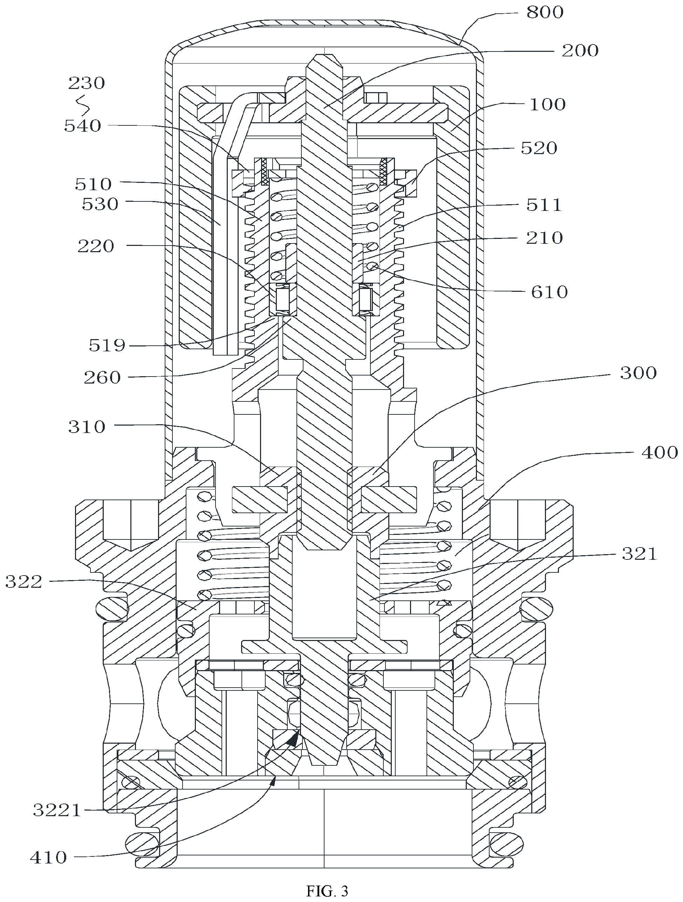

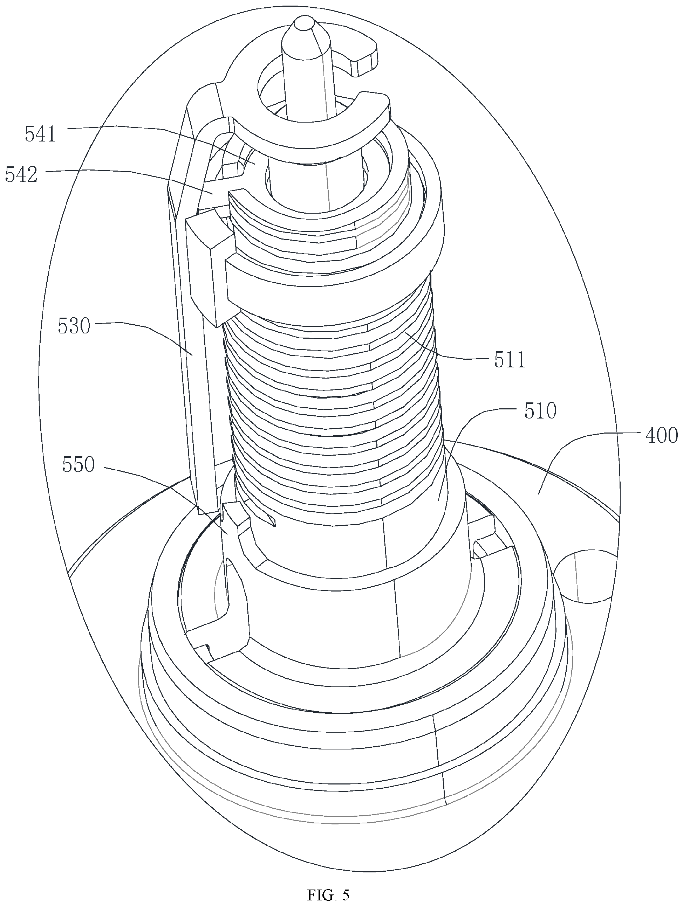

Referring to FIG. 1 to FIG. 5, in an embodiment, an electronic expansion valve includes a stop seat 510, a rotor assembly 100, a screw rod 200, a valve core assembly 300, and a valve seat assembly 400. The stop seat 510 may be fixed to the valve seat assembly 400, and the stop seat 510 is disposed on an outer periphery of the screw rod 200. The valve seat assembly 400 is provided with a valve port portion 410, and the valve core assembly 300 may be movable relative to the valve seat assembly 400 along an axial direction of the screw rod 200. An end of the screw rod 200 may be fixed to the rotor assembly 100, and an other end of the screw rod 200 may be connected to the valve core assembly 300. The rotor assembly 100 may be configured to drive the valve core assembly 300 to move towards or away from the valve port portion 410 via the screw rod 200.

In some embodiments, the electronic expansion valve further includes a first restricting member 220, a second restricting member 230, and a first elastic member 610. One of the first restricting member 220 and the second restricting member 230 may be fixed to the stop seat 510, and another one of the first restricting member 220 and the second restricting member 230 may be fixed to the screw rod 200. An end of the first elastic member 610 may be connected to the first restricting member 220, and an other end of the first elastic member 610 may be connected to the second restricting member 230. When the screw rod 200 moves along a direction from the valve port portion 410 to the rotor assembly 100, the first elastic member 610 is configured to generate an elastic pre-tightening force on the screw rod 200 along a direction from the rotor assembly 100 to the valve port portion 410.

Specifically, the electronic expansion valve may further include a stop ring 520 and a guide rod 530. An outer peripheral side of the stop seat 510 away from the screw rod 200 may further be provided with an outer guide rail portion. The stop ring 520 may be sleeved on an outer periphery of the stop seat 510 and in movable engagement with the outer guide rail portion. Specifically, the outer peripheral side of the stop seat 510 facing away from the screw rod 200 may be provided with an external threaded portion 511, and the stop ring 520 may be sleeved on the outer periphery of the stop seat 510 and in movable threaded engagement with the external threaded portion 511. The guide rod 530 may be fixed to the rotor assembly 100 or the screw rod 200, such that the rotor assembly 100 may be configured to drive the guide rod 530 to push the stop ring 520 to move spirally along the external threaded portion 511. Furthermore, the screw rod 200 and the valve core assembly 300 may be in movable threaded engagement.

During normal operation of the screw rod 200, the screw rod 200 and the rotor assembly 100 may be supported by the stop seat 510, the screw rod 200 may rotate in place with the rotor assembly 100, and the screw rod 200 does not move along the axial direction. When the screw rod 200 drives the valve core assembly 300 to close the valve port portion 410, the rotor assembly 100 continues to rotate, and the screw rod 200 continues to rotate relative to the valve core assembly 300. However, since the valve core assembly 300 has already abutted against the valve port portion 410, the valve core assembly 300 cannot continue to move towards the valve port portion 410. At this time, under the impetus of the reaction force, the screw rod 200 moves along the direction away from the valve port portion 410. Furthermore, due to the limiting action of the first restricting member 220 and the second restricting member 230, the first elastic member 610 is clamped between the screw rod 200 and the stop seat 510, and the first elastic member 610 is configured as the compression elastic member. Therefore, during the movement of the screw rod 200 away from the valve port portion 410, the first elastic member 610 continues to be compressed by the screw rod 200. At this time, the first elastic member 610 in turn applies an acting force on the screw rod 200 towards the valve port portion 410, thereby increasing the pressing force of the valve core assembly 300 against the valve port portion 410, achieving the pre-tightening effect on the valve port portion 410, preventing loosening and leakage between the valve core assembly 300 and the valve port portion 410.

In some embodiments, the electronic expansion valve may further include a first restricting member 220 and a first elastic member 610. The first restricting member 220 may be configured as a bearing member. An outer ring of a bearing of the first restricting member 220 is restricted on an inner wall of the stop seat 510, and an inner ring of the bearing of the first restricting member 220 may be stopped by an outer wall of the screw rod 200 to prevent the screw rod 200 from moving towards the valve port portion 410. An end of the first elastic member 610 adjacent to the valve port portion 410 may abut against the screw rod 200, and an other end of the first elastic member 610 away from the valve port portion 410 may abut against the inner ring of the bearing of the first restricting member 220. When the screw rod 200 moves along a direction from the valve port portion 410 to the rotor assembly 100, the first elastic member 610 is configured to generate an elastic pre-tightening force on the screw rod 200 along a direction from the rotor assembly 100 to the valve port portion 410.

Specifically, the electronic expansion valve may further include a stop ring 520 and a guide rod 530. An outer peripheral side of the stop seat 510 away from the screw rod 200 may be provided with an external threaded portion 511. The stop ring 520 may be sleeved on an outer periphery of the stop seat 510 and in movable engagement with the external threaded portion 511. The guide rod 530 may be fixed to the rotor assembly 100 or the screw rod 200, such that the rotor assembly 100 may be configured to drive the guide rod 530 to push the stop ring 520 to move spirally along the external threaded portion 511. In addition, the electronic expansion valve may further include a housing 800. The housing 800 may be configured to cover and accommodate the rotor assembly 100, a part of the screw rod 200, and a part of the valve core assembly 300, and the housing 800 may be connected to the valve seat assembly 400 by welding. Furthermore, the screw rod 200 and the valve core assembly 300 may be in movable threaded engagement.

When the screw rod 200 drives the valve core assembly 300 to close the valve port portion 410, the rotor assembly 100 continues to rotate, and the screw rod 200 continues to rotate relative to the valve core assembly 300. However, since the valve core assembly 300 has already abutted against the valve port portion 410, the valve core assembly 300 cannot continue to move towards the valve port portion 410. At this time, under the impetus of the reaction force, the screw rod 200 moves along the direction away from the valve port portion 410. Furthermore, due to the limiting action of the first elastic member 610 being the compression elastic member, during the movement of the screw rod 200 away from the valve port portion 410, the first elastic member 610 continues to be compressed by the screw rod 200. At this time, the first elastic member 610 in turn applies an acting force on the screw rod 200 towards the valve port portion 410, thereby increasing the pressing force of the valve core assembly 300 against the valve port portion 410, achieving the pre-tightening effect on the valve port portion 410, and preventing loosening and leakage between the valve core assembly 300 and the valve port portion 410.

To facilitate the inner ring of the bearing of the first restricting member 220 supporting the screw rod 200, in an embodiment, the electronic expansion valve may further include a restricting collar 210. The restricting collar 210 may be fixed to and sleeved on the screw rod 200, and the restricting collar 210 may be stopped by an end of the first restricting member 220 away from the valve port portion 410.

Since the restricting collar 210 is fixed to and sleeved on tthe screw rod 200 and stopped by the end of the first restricting member 220 away from the valve port portion 410, under the limiting effect of the restricting collar 210, the screw rod 200 cannot move towards the valve port portion 410. Thus, the screw rod 200 cannot apply a pre-tightening force to the connection between the valve core assembly 300 and the valve port portion 410 by moving itself towards the valve port portion 410. That is, the screw rod 200 can only apply a pre-tightening force to the connection between the valve core assembly 300 and the valve opening portion 410 by compressing the first elastic member 610.

To facilitate the end of the first elastic member 610 adjacent to the valve port portion 410 abutting against the screw rod 200, in an embodiment, the electronic expansion valve may further include a second restricting member 230. The second restricting member 230 may be fixed to an outer wall of the screw rod 200, and the end of the first elastic member 610 adjacent to the valve port portion 410 may abut against the second restricting member 230.

In an embodiment, the stop seat 510 may be provided with a first stopping portion 540 configured to limit a movement distance of the valve core assembly 300 towards an end of the electronic expansion valve away from the valve port portion 410. The outer ring of the bearing of the first restricting member 220 may be embedded between the first stopping portion 540 and the stop seat 510. The stop seat 510 may include a stop main body 512 and a first connecting insert member 513. The stop main body 512 may be configured as an injection-molded member. An end of the first connecting insert member 513 may be embedded in the stop main body 512, and an other end may be connected to the first stopping portion 540 by welding. In an embodiment, the stop seat 510 may further include a second connecting insert member 514. An end of the second connecting insert member 514 may be embedded in the stop main body 512, and an other end may be connected to the valve seat assembly 400 by welding.

In some embodiments, the electronic expansion valve may further include a first restricting member 220 and a first elastic member 610. The first restricting member 220 may be configured as a bearing member. An inner ring of a bearing of the first restricting member 220 may be fixed to an outer wall of the screw rod 200, and an outer ring of the bearing of the first restricting member 220 may be stopped by an inner wall of the stop seat 510 to prevent the screw rod 200 from moving towards the valve port portion 410. An end of the first elastic member 610 adjacent to the valve port portion 410 may abut against the first restricting member 220, and an other end of the first elastic member 610 away from the valve port portion 410 may be directly or indirectly stopped by the inner wall of the stop seat 510. When the screw rod 200 moves along a direction from the valve port portion 410 to the rotor assembly 100, the first elastic member 610 is configured to generate an elastic pre-tightening force on the screw rod 200 along a direction from the rotor assembly 100 to the valve port portion 410.

Specifically, the electronic expansion valve may further include a stop ring 520 and a guide rod 530. An outer peripheral side of the stop seat 510 away from the screw rod 200 may be provided with an external threaded portion 511. The stop ring 520 may be sleeved on an outer periphery of the stop seat 510 and in movable engagement with the external threaded portion 511. The guide rod 530 may be fixed to the rotor assembly 100 or the screw rod 200, such that the rotor assembly 100 may be configured to drive the guide rod 530 to push the stop ring 520 to move spirally along the external threaded portion 511. Moreover, the screw rod 200 and the valve core assembly 300 may be in movable threaded engagement.

When the screw rod 200 drives the valve core assembly 300 to close the valve port portion 410, the rotor assembly 100 continues to rotate, and the screw rod 200 continues to rotate relative to the valve core assembly 300. However, since the valve core assembly 300 has already abutted against the valve port portion 410, the valve core assembly 300 cannot continue to move towards the valve port portion 410. At this time, under the impetus of the reaction force, the screw rod 200 moves along the direction away from the valve port portion 410. Furthermore, due to the limiting action of the first elastic member 610 being the compression elastic member, during the movement of the screw rod 200 away from the valve port portion 410, the first elastic member 610 continues to be compressed by the screw rod 200. At this time, the first elastic member 610 in turn applies an acting force on the screw rod 200 towards the valve port portion 410, thereby increasing the pressing force of the valve core assembly 300 against the valve port portion 410, achieving the pre-tightening effect on the valve port portion 410, and preventing loosening and leakage between the valve core assembly 300 and the valve port portion 410.

To facilitate the inner ring of the bearing of the first restricting member 220 supporting the screw rod 200, in an embodiment, the electronic expansion valve may further include a restricting collar 210. The restricting collar 210 may be fixed to and sleeved on the screw rod 200, and the restricting collar 210 may be stopped by an end of the first restricting member 220 away from the valve port portion 410.

Since the restricting collar 210 is fixed to and sleeved on the screw rod 200 and stopped by the end of the first restricting member 220 away from the valve port portion 410, under the limiting effect of the restricting collar 210, the screw rod 200 cannot move towards the valve port portion 410. Thus, the screw rod 200 cannot apply a pre-tightening force to the connection between the valve core assembly 300 and the valve port portion 410 by moving itself towards the valve port portion 410. That is, the screw rod 200 can only apply a pre-tightening force to the connection between the valve core assembly 300 and the valve opening portion 410 by compressing the first elastic member 610.

In some embodiments, the first restricting member 220 may be configured as a bearing member. An outer ring of a bearing of the first restricting member 220 may be fixed to the inner wall of the stop seat 510, and an inner ring of the bearing of the first restricting member 220 may be movably sleeved on the outer wall of the screw rod 200. In addition, the screw rod 200 may be in guiding cooperation with the inner ring of the bearing of the first restricting member 220.

In this embodiment, the guiding cooperation may be a clearance movable cooperation. The screw rod 200 can be prevented from tilting by the guiding cooperation between the screw rod 200 and the inner ring of the bearing of the first restricting member 220, such that deflection of the screw rod 200 can be avoided.

In some embodiments, the first restricting member 220 may be configured as a bearing member. An inner ring of a bearing of the first restricting member 220 may be fixed to an outer wall of the screw rod 200, and an outer ring of the bearing of the first restricting member 220 may be in guiding cooperation with an inner wall of the stop seat 510.

In this embodiment, the guide guiding cooperation may be a clearance movable cooperation. The screw rod 200 can be prevented from tilting by the guiding cooperation between the outer ring of the bearing of the first restricting member 220 and the inner wall of the stop seat 510.

In some embodiments, the electronic expansion valve may further include a stopping structure and a first elastic member 610. The stopping structure may be disposed on an inner wall of the stop seat 510, and configured to abut against a side portion of the screw rod 200 to prevent the screw rod 200 moving along a direction from the rotor assembly 100 to the valve port portion 410. An end of the first elastic member 610 adjacent to the valve port portion 410 may abut against the screw rod 200, and an other end of the first elastic member 610 away from the valve port portion 410 may abut against the stop seat 510. In addition, the first elastic member 610 may be in a compressed state. When the screw rod 200 moves along the direction from the valve port portion 410 to the rotor assembly 100, the first elastic member 610 in the compressed state may be configured to generate an elastic stopping force on the screw rod 200 along the direction from the rotor assembly 100 to the valve port portion 410.

Under the stopping action of the stopping structure, the screw rod 200 can be prevented from moving along the direction from the rotor assembly 100 to the valve port portion 410. Furthermore, the elastic stopping force may be generated by the first elastic member 610 on the screw rod 200 along the direction from the rotor assembly 100 to the valve port portion 410. Therefore, under the bidirectional stopping action of the stopping structure and the first elastic member 610, the screw rod 200 can only rotate relative to the stop seat 510 and cannot move along the axial direction of the stop seat 510.

In some embodiments, the screw rod 200 and the valve core assembly 300 may be in movable threaded engagement.

It should be noted that the axial limiting of the screw rod 200 by the stopping structure may be a hard limit. Thus, it can be effectively ensured that the screw rod 200 cannot break through the limiting action of the stopping structure. The axial limiting of the screw rod 200 by the first elastic member 610 may be a soft limit. When the axial force acting on the screw rod 200 is sufficiently large, the screw rod 200 can, to a certain extent, break through the limiting action of the first elastic member 610. By this configuration, compared to having hard limits at both ends of the screw rod 200, having a hard limit at one end and a soft limit at an other end of the screw rod 200 may allow the screw rod 200 counteract excessive axial force acting on the screw rod 200 via restricted axial displacement, preventing excessive wear of the screw rod 200 and prolonging the service life of the screw rod 200.

The electronic expansion valve may further include a housing 800. The housing 800 may be configured to cover and accommodate the rotor assembly 100, a part of the screw rod 200, and a part of the valve core assembly 300, and the housing 800 may be connected to the valve seat assembly 400 by welding.

In an embodiment, the first elastic member 610 may be configured as a compression spring. In addition, the first elastic member 610 may be sleeved on the screw rod 200.

By this configuration, the difficulty of processing the first elastic member 610 is significantly reduced, and the difficulty of assembling the first elastic member 610 and the screw rod 200 is also reduced.

In an embodiment, the valve core assembly 300 includes a sliding nut 310 and a valve needle assembly 320. An end of the screw rod 200 away from the rotor assembly 100 may be in threaded engagement with the sliding nut 310. The sliding nut 310 and the stop seat 510 may be cooperated via a limiting structure, such that the screw rod 200 may be configured to drive the sliding nut 310 to further drive the valve core assembly 300 to move relative to the stop seat 510 along the axial direction of the screw rod 200, to open or close the valve port portion 410, In addition, the sliding nut 310 can be prevented by the limiting structure from rotating relative to the stop seat 510 about an axis of the screw rod 200.

By providing the limiting structure, the sliding nut 310 can be prevented from rotating relative to the stop seat 510 about the axis of the screw rod 200. At this time, the sliding nut 310 can move relative to the screw rod 200 along the axial direction of the screw rod 200, such that the screw rod 200 can be configured to drive the sliding nut 310 to further drive the valve core assembly 300 to open or close the valve port portion 410. The wear between the sliding nut 310 and the stop seat 510 caused by relative rotation can be prevented.

In an embodiment, the sliding nut 310 may include a main body portion 314 and a connecting portion 315. The main body portion 314 may be configured as an injection-molded member, and the connecting portion 315 may be configured as a metal member. The sliding nut 310 may be threadably connected to the screw rod 200 via the main body portion 314. The sliding nut 310 may be configured to cooperate with the stop seat 510 or the valve seat assembly 400 via the main body portion 314. An end of the connecting portion 315 may be fixed to the main body portion 314, and an other end of the connecting portion 315 may be connected to the valve needle assembly 320 by welding.

Since the main body portion 314 is configured as the injection-molded member, a weight of the sliding nut 310 can be significantly reduced and the difficulty of processing the sliding nut 310 can also be reduced. Since the connecting portion 315 is configured as the metal member, the welding of the valve needle assembly 320 to the sliding nut 310 via the connecting portion 315 is facilitated, and the connection strength between the sliding nut 310 and the valve needle assembly 320 is improved. Moreover, by this configuration, the same sliding nut 310 is adapted to match valve needle assemblies 320 of different specifications. That is, it is only necessary to manufacture one sliding nut 310, which can be adapted to the valve needle assemblies 320 of different specifications.

### The First Embodiment

In this embodiment, the first restricting member 220 may be fixed to an inner wall of the stop seat 510, and the second restricting member 230 may be fixed to an outer wall of the screw rod 200. The first restricting member 220 may be disposed at an end of the first elastic member 610 away from the valve port portion 410, and the second restricting member 230 may be disposed at an end of the first elastic member 610 adjacent to the valve port portion 410.

In this embodiment, the outer wall of the screw rod 200 may be provided with a first rod body step 240, and the first rod body step 240 may be defined as the second restricting member 230.

By this configuration, the assembly of the second restricting member 230 and the screw rod 200 is simplified, and the connection firmness between the second restricting member 230 and the screw rod 200 is improved.

In this embodiment, the first restricting member 220 may be configured as a bearing member. An outer ring of a bearing of the first restricting member 220 may be fixed to the inner wall of the stop seat 510, and an inner ring of the bearing of the first restricting member 220 may be movably sleeved on the outer wall of the screw rod 200, such that the screw rod 200 can be configured to drive the inner ring of the bearing of the first restricting member 220 to rotate synchronously, and the screw rod 200 can be configured to move along its own axial direction relative to the inner ring of the bearing of the first restricting member 220.

It can be understood that the bearing member may be a relatively special type of shaft connecting member. When the first restricting member 220 is configured as the bearing member, the screw rod 200 can be configured to drive the inner ring of the bearing of the first restricting member 220 to rotate synchronously. Thus, the stop seat 510 can provide a limiting effect on the screw rod 200 via the bearing member, so as to ensure the coaxiality of the screw rod 200 and the stop seat 510 and prevent the screw rod 200 from eccentricity. Moreover, by configuring the first restricting member 220 as the bearing member, sliding friction between the screw rod 200 and the stop seat 510 is effectively prevented.

In this embodiment, the inner ring of the bearing of the first restricting member 220 may not be fixed to the outer wall of the screw rod 200. Specifically, the screw rod 200 may be configured to move along its own axial direction relative to the inner ring of the bearing of the first restricting member 220. That is, a certain frictional force may exist between the screw rod 200 and the inner ring of the bearing of the first restricting member 220, and the inner ring of the bearing of the first restricting member 220 can be driven by the friction force to rotate synchronously with the screw rod 200. However, when the screw rod 200 needs to move axially against the elastic force of the first elastic member 610, the first restricting member 220 does not limit the movement of the screw rod 200. More specifically, when the valve core assembly 300 blocks the valve port portion 410, if the screw rod 200 continues to rotate, the valve core assembly 300 does not continue to move. At this time, the first elastic member 610 can be compressed by the screw rod 200 along a direction away from the valve port portion 410, such that a pre-tightening force is applied by the first elastic member 610 to the connection between the valve core assembly 300 and the valve port portion 410.

The spool assembly 300 may include a sliding nut 310, a first valve needle 321, and a second valve needle 322 that are interconnected. An end of the screw rod 200 away from the rotor assembly 100 may be in threaded engagement with the sliding nut 310, and the sliding nut 310 and the stop seat 510 may be in sliding engagement along the axial direction of the screw rod 200. Thus, the screw rod 200 can be configured to drive the sliding nut 310 to further drive the second valve needle 322 via the first valve needle 321 to open or close the valve port portion 410. The second valve needle 322 is provided with a regulating valve port 3221 configured to be in communication with the valve port portion 410. The end of the screw rod 200 away from the rotor assembly 100 may be in threaded engagement with the sliding nut 310, and the sliding nut 310 and the stop seat 510 may be cooperated with each other via a limiting structure. The stop seat 510 may be fixed to the valve seat assembly 400.

When the first valve needle 321 strikes the regulating valve port 3221 or the second valve needle 322 strikes the valve port portion 410, a certain impact force may be generated. The impact force is reduced by the sliding nut 310 and the stop seat 510 and then transmitted to the first restricting member 220, preventing damage to the first restricting member 220. Therefore, a magnitude of the impact force transmitted to the first restricting member 220 may be reduced by the arrangement of the sliding nut 310 and the stop seat 510.

In this embodiment, the end of the first elastic member 610 away from the valve port portion 410 may abut against the inner ring of the bearing of the first restricting member 220.

By this configuration, the first elastic member 610, the inner ring of the bearing of the first restricting member 220, the screw rod 200, and the rotor assembly 100 can rotate synchronously. No sliding friction occurs between the first elastic member 610 and the inner ring of the bearing of the first restricting member 220, thereby reducing wear among the screw rod 200, the first elastic member 610, and the first restricting member 220, and prolonging the service life of the electronic expansion valve.

In this embodiment, the outer ring of the bearing of the first restricting member 220 may be embedded into the inner wall of the stop seat 510. Specifically, the outer ring of the bearing of the first restricting member 220 may be embedded into the stop seat 510 by means of integral injection molding.

In another embodiment, the outer ring of the bearing of the first restricting member 220 may be clamped and embedded in the inner wall of the stop seat 510.

In another embodiment, the outer ring of the bearing of the first restricting member 220 may be adhesively bonded and embedded in the inner wall of the stop seat 510.

Alternatively, in other embodiments, the first restricting member 220 may be configured as a metal member, and the outer ring of the bearing of the first restricting member 220 may be connected to the stop seat 510 in a welding, bonding, or threading manner.

In this embodiment, the inner wall of the stop seat 510 may be provided with a first seat body step 518. A side of the stop seat 510 away from the valve port portion 410 may be provided with a first stopping portion 540. The first restricting member 220 may be disposed between the first stopping portion 540 and the first seat body step 518.

In this embodiment, a top portion of the stop seat 510 may be provided with a first connecting insert member 513, and the first stopping portion 540 may be connected to the first connecting insert member 513.

In an embodiment, the stop seat 510 may be further provided with a second stopping portion 550. When the stop ring 520 is stopped by the second stopping portion 550, the valve core assembly 300 may abut against the valve port portion 410 and close the valve port portion 410.

By providing the first stopping portion 540 and the second stopping portion 550, the movement path of the stop ring 520 on the external threaded portion 511 can be effectively restricted, thereby limiting a range of a rotation angle of the guide rod 530 relative to the stop seat 510. Since the guide rod 530 is fixed to the rotor assembly 100 or the screw rod 200, the range of the rotation angle of the rotor assembly 100 can be effectively restricted, the movement path of the valve core assembly 300 relative to the valve port portion 410 can be controlled, wear between the valve core assembly 300 and the valve port portion 410 can be prevented, and the impact force of the valve core assembly 300 on the valve port portion 410 during valve closing can be reduced. Furthermore, by this configuration, it is possible to prevent the stop ring 520 from moving to an area outside the external threaded portion 511, which would otherwise affect the threaded engagement between the stop ring 520 and the stop seat 510.

### The Second Embodiment

In this embodiment, the first restricting member 220 may be fixed to the outer wall of the screw rod 200, and the second restricting member 230 may be fixed to the inner wall of the stop seat 510. The first restricting member 220 may be disposed at an end of the first elastic member 610 adjacent to the valve port portion 410, and the second restricting member 230 may be disposed at an other end of the first elastic member 610 away from the valve port portion 410.

A side of the stop seat 510 away from the valve port portion 410 may be provided with a first stopping portion 540. The first stopping portion 540 may be configured to stop the stop ring 520, or the first stopping portion 540 may be defined as the second restricting member 230. When the stop ring 520 is stopped by the first stopping portion 540, the valve core assembly 300 and the valve port portion 410 may be spaced apart and stop moving.

The first stopping portion 540 may be configured to stop the stop ring 520 and simultaneously form the second restricting member 230. Thus, the first stopping portion 540 can simultaneously achieve functions of stopping the stop ring 520 and the first elastic member 610, simplifying the structure of the electronic expansion valve, and improving the structural integration of the electronic expansion valve.

In this embodiment, the first stopping portion 540 may include an annular-shaped fixing ring 541 and a stopping rib 542. An inner circumference of the annular-shaped fixing ring 541 may surround a peripheral side of the screw rod 200, and an outer ring of the annular-shaped fixing ring 541 may be fixed to the inner wall of the stop seat 510. The stop seat 510 may be provided with a notch corresponding to the stopping rib 542. An end of the stopping rib 542 may be connected to the outer ring of the annular-shaped fixing ring 541, and an other end of the stopping rib 542 may pass through the notch along a radial direction of the stop seat 510 and protrude from an outer side surface of the stop seat 510.

In this embodiment, the first restricting member 220 may be configured as a bearing member. An inner ring of a bearing of the first restricting member 220 may be fixed to the outer wall of the screw rod 200, and an outer ring of the bearing of the first restricting member 220 may be movably inserted into the inner wall of the stop seat 510, such that the screw rod 200 may be configured to drive the outer ring of the bearing of the first restricting member 220 to move along its own axial direction relative to the stop seat 510, and the rotation of the outer ring of the bearing of the first restricting member 220 can be restricted by the inner wall of the stop seat 510.

It can be understood that the bearing member is a relatively special type of shaft connecting member. When the first restricting member 220 is the bearing member, the screw rod 200 can be configured to drive the inner ring of the bearing of the first restricting member 220 to rotate synchronously. Thus, the stop seat 510 can provide a limiting effect on the screw rod 200 via the bearing member, so as to ensure the coaxiality of the screw rod 200 and the stop seat 510 and prevent the screw rod 200 from eccentricity. Furthermore, by configuring the first restricting member 220 as the bearing member, sliding friction between the screw rod 200 and the stop seat 510 is effectively prevented.

In this embodiment, the outer ring of the bearing of the first restricting member 220 may not be fixed to the inner wall of the stop seat 510. Specifically, the screw rod 200 may be configured to drive the outer ring of the bearing of the first restricting member 220 to move axially relative to the stop seat 510. When the screw rod 200 needs to move axially against the elastic force of the first elastic member 610, the first restricting member 220 does not limit the movement of the screw rod 200. More specifically, when the valve core assembly 300 blocks the valve port portion 410, if the screw rod 200 continues to rotate, the valve core assembly 300 does not continue to move. At this time, the first elastic member 610 can be compressed by the screw rod 200 along a direction away from the valve port portion 410, such that a pre-tightening force is applied by the first elastic member 610 to the connection between the valve core assembly 300 and the valve port portion 410.

In this embodiment, an end of the first elastic member 610 adjacent to the valve port portion 410 may abut against the outer ring of the bearing of the first restricting member 220.

By this configuration, the first elastic member 610, the outer ring of the bearing of the first restricting member 220, and the stop seat 510 do not rotate synchronously with the screw rod 200. No sliding friction occurs between the first elastic member 610 and the outer ring of the bearing of the first restricting member 220, thereby reducing wear among the stop seat 510, the first elastic member 610, and the first restricting member 220, and prolonging the service life of the electronic expansion valve.

In this embodiment, the first restricting member 220 may be configured as a metal member, and the inner ring of the bearing of the first restricting member 220 and the screw rod 200 may be connected in a welding, bonding, or threading manner.

Alternatively, in other embodiments, the inner ring of the bearing of the first restricting member 220 may be embedded in the outer wall of the screw rod 200.

In an embodiment, the inner ring of the bearing of the first restricting member 220 may be embedded in the outer wall of the screw rod 200 by injection molding.

In another embodiment, the inner ring of the bearing of the first restricting member 220 may be clamped and embedded in the outer wall of the screw rod 200.

In another embodiment, the inner ring of the bearing of the first restricting member 220 may be adhesively bonded and embedded in the outer wall of the screw rod 200.

Alternatively, in other embodiments, the inner ring of the bearing of the first restricting member 220 may be embedded in the outer wall of the screw rod 200. Specifically, the inner ring of the bearing of the first restricting member 220 may be embedded in the screw rod 200 by integral injection molding.

In this embodiment, the electronic expansion valve may further include a restricting collar 210. The restricting collar 210 may be fixed to and sleeved on the screw rod 200. An inner wall of the stop seat 510 may be provided with a first seat body step 518, and the first restricting member 220 may be disposed between the restricting collar 210 and the first seat body step 518.

In an embodiment, the stop seat 510 may be further provided with a second stopping portion 550. When the stop ring 520 is stopped by the second stopping portion 550, the valve core assembly 300 may abut against the valve port portion 410 and close the valve port portion 410.

By providing the first stopping portion 540 and the second stopping portion 550, the movement path of the stop ring 520 on the external threaded portion 511 can be effectively restricted, thereby limiting a range of a rotation angle of the guide rod 530 relative to the stop seat 510. Since the guide rod 530 is fixed to the rotor assembly 100 or the screw rod 200, the range of the rotation angle of the rotor assembly 100 can be effectively restricted, the movement path of the valve core assembly 300 relative to the valve port portion 410 can be controlled, wear between the valve core assembly 300 and the valve port portion 410 can be prevented, and the impact force of the valve core assembly 300 on the valve port portion 410 during valve closing can be reduced. Furthermore, by this configuration, it is possible to prevent the stop ring 520 from moving to an area outside the external threaded portion 511, which would otherwise affect the threaded engagement between the stop ring 520 and the stop seat 510.

In an embodiment, the stop seat 510 may include a stop main body 512 and a first connecting insert member 513. The stop body 512 may be configured as an injection-molded member. An end of the first connecting insert member 513 may be embedded in the stop main body 512, and an other end of the first connecting insert member 513 may be connected to the annular-shaped fixing ring 541 by welding.

In another embodiment, a side of the stop seat 510 away from the valve port portion 410 may be provided with an annular-shaped fixing ring 541, and the annular-shaped fixing ring 541 may directly form the second restricting member 230.

### The Third Embodiment

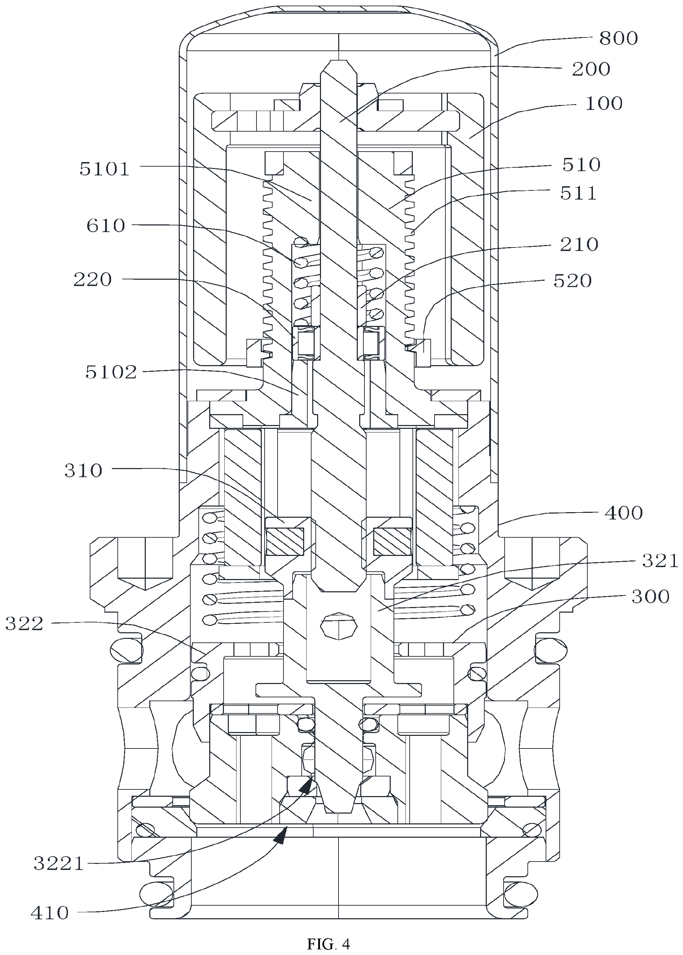

In an embodiment, as shown in FIG. 4, an end of the stop seat 510 away from the valve port portion 410 may be fixedly provided with a first mating portion 5101 in movable guiding cooperation with the screw rod 200. Specifically, the first mating portion 5101 and the stop seat 510 may be formed as an integral structure, and the inner wall of the first mating portion 5101 may be in movable guiding cooperation with the outer wall of the screw rod 200. An end of the stop seat 510 adjacent to the valve port portion 410 may be fixedly provided with a second mating portion 5102 in movable limiting cooperation with the screw rod 200, and the second mating portion 5102 and the stop seat 510 may be formed as separate parts.

Thus, by providing the first mating portion 5101, the coaxiality of the screw rod 200 and the stop seat 510 can be improved. In addition, the second mating portion 5102 and the stop seat 510 are provided as separate parts, which facilitates the assembly of the screw rod 200 in the stop seat 510.

In an embodiment, the second mating portion 5102 may be stopped by an end of the first restricting member 220 adjacent to the valve port portion 410 to prevent the first restricting member 220 from moving towards the valve port portion 410. Furthermore, an end of the first elastic member 610 may abut against the first mating portion 5101, and an other end of the first elastic member 610 may abut against the first restricting member 220.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present disclosure.

The above embodiments only illustrate several implementations of the present disclosure, and the description thereof is specific and detailed, but cannot therefore be understood as limiting the protection scope of the present disclosure. It should be noted that those of ordinary skill in the art may further make variations and improvements without departing from the conception of the present disclosure, and these all fall within the protection scope of the present disclosure. Therefore, the protection scope of the present disclosure should be subjected to the appended claims.

## Claims

1. An electronic expansion valve, **characterized by** comprising a stop seat, a rotor assembly , a screw rod, and a valve seat assembly, wherein the valve seat assembly is provided with a valve port portion; and
the electronic expansion valve further comprises a first elastic member, an end of the first elastic member is directly or indirectly connected to the stop seat, and an other end of the first elastic member is directly or indirectly connected to the screw rod, and
when the screw rod moves along a direction from the valve port portion to the rotor assembly, the first elastic member is configured to generate an elastic pre-tightening force on the screw rod along a direction from the rotor assembly to the valve port portion.

2. The electronic expansion valve of claim 1, further comprising a first restricting member and a second restricting member, wherein one of the first restricting member and the second restricting member is fixed to the stop seat, and an other one of the first restricting member and the second restricting member is fixed to the screw rod.

3. The electronic expansion valve of claim 1, wherein the first elastic member is a compression spring, and the first elastic member is sleeved on the screw rod.

4. The electronic expansion valve of claim 2, wherein the first restricting member is fixed to an inner wall of the stop seat, the second restricting member is fixed to an outer wall of the screw rod, and an end of the first elastic member away from the valve port portion abuts against the first restricting member, and an other end of the first elastic member adjacent to the valve port portion abuts against the second restricting member.

5. The electronic expansion valve of claim 4, wherein the outer wall of the screw rod is provided with a first rod body step, and the first rod body step is defined as the second restricting member.

6. The electronic expansion valve of claim 4, wherein the inner wall of the stop seat is provided with a first seat body step, a side of the stop seat away from the valve port portion is provided with a first stopping portion, and the first restricting member is disposed between the first stopping portion and the first seat body step.

7. The electronic expansion valve of claim 6, wherein a top portion of the stop seat is provided with a first connecting insert member, and the first stopping portion is connected to the first connecting insert member.

8. The electronic expansion valve of claim 2, wherein the first restricting member is fixed to an outer wall of the screw rod, the second restricting member is fixed to an inner wall of the stop seat, and an end of the first elastic member adjacent to the valve port portion abuts against the first restricting member, and an other end of the first elastic member away from the valve port portion abuts against the second restricting member.

9. The electronic expansion valve of claim 8, further comprising a restricting collar, wherein the restricting collar is fixed to and sleeved on the screw rod, and the restricting collar is provided at an end of the first restricting member away from the valve port portion and stops the end of the first restricting member away from the valve port portion; and the inner wall of the stop seat is provided with a first seat body step, and the first restricting member is disposed between the restricting collar and the first seat body step.

10. The electronic expansion valve of claim 8, wherein a side of the stop seat away from the valve port portion is provided with a first stopping portion, and the first stopping portion is defined as the second restricting member.

11. The electronic expansion valve of claim 10, wherein a top portion of the stop seat is provided with a first connecting insert member, and the first stopping portion is connected to the first connecting insert member.

12. The electronic expansion valve of claim 1, further comprising a valve core assembly and a stop ring, wherein the stop seat is further provided with a second stopping portion, and when the stop ring is stopped by the second stopping portion, the valve core assembly abuts against the valve port portion and closes the valve port portion.

13. The electronic expansion valve of claim 1, further comprising a valve core assembly, wherein the valve core assembly comprises a sliding nut and a valve needle assembly, the sliding nut comprises a main body portion and a connecting portion, the main body portion is configured as an injection-molded member, the sliding nut fits with the stop seat or the valve seat assembly via the main body portion, an end of the connecting portion is fixed to the main body portion, and an other end of the connecting portion is connected to the valve needle assembly.

14. The electronic expansion valve of claim 1, further comprises a stopping structure, the stopping structure is disposed on an inner wall of the stop seat, and configured to abut against a side portion of the screw rod to prevent the screw rod from moving along a direction from the rotor assembly to the valve port portion; an end of the first elastic member adjacent to the valve port portion abuts against the screw rod, and an other end of the first elastic member away from the valve port portion abuts against the stop seat, the first elastic member is in a compressed state, and when the screw rod moves along the direction from the valve port portion to the rotor assembly, the first elastic member in the compressed state is configured to generate an elastic stopping force on the screw rod along the direction from the rotor assembly to the valve port portion.

15. The electronic expansion valve of claim 14, further comprising a restricting collar, wherein the restricting collar is fixed to and sleeved on the screw rod, the stopping structure comprises a first restricting member, an end of the first restricting member is fixed to the inner wall of the stop seat, and an other end of the first restricting member extends along a radial direction of the stop seat towards the screw rod, and the first restricting member is provided at an end of the restricting collar adjacent to the valve port portion and configured to stop the end of the restricting collar adjacent to the valve port portion, and an end of the first elastic member away from the valve port portion is stopped by the first restricting member, and an other end of the first elastic member adjacent to the valve port portion abuts against and is stopped by an outer wall of the screw rod.

16. The electronic expansion valve of claim 15, wherein the stopping structure further comprises a first seat body step disposed on the inner wall of the stop seat, and the first seat body step is stopped by an end of the first restricting member adjacent to the valve port portion.

17. The electronic expansion valve of claim 15, wherein the outer wall of the screw rod is provided with a first rod body step, an end of the first elastic member abuts against the first rod body step, and an other end of the first elastic member abuts against the first restricting member.

18. The electronic expansion valve of claim 15, wherein the rotor assembly comprises a magnetic rotor and a connecting member, the magnetic rotor is sleeved on the stop seat and fixed to an end of the screw rod away from the valve port portion via the connecting member; and
the restricting collar is clamped between the first restricting member and the connecting member.

19. The electronic expansion valve of claim 15, wherein the first restricting member is configured as a bearing member, an outer ring of a bearing of the first restricting member is fixed to the inner wall of the stop seat, an inner ring of the bearing of the first restricting member is movably sleeved on the outer wall of the screw rod, and the screw rod is in guiding fit with the inner ring of the bearing of the first restricting member.

20. The electronic expansion valve of claim 14, wherein a first restricting member is fixed to and sleeved on an outer wall of the screw rod, the stopping structure comprises a second seat body step disposed on the inner wall of the stop seat, the second seat body step is stopped by an end of the first restricting member adjacent to the valve port portion to prevent the screw rod from moving towards the valve port portion, an end of the stop seat away from the valve port portion is provided with a first stopping portion, an end of the first elastic member adjacent to the valve port portion is stopped by the first restricting member, and an other end of the first elastic member away from the valve port portion is stopped by the first stopping portion.

21. The electronic expansion valve of claim 20, further comprising a restricting collar, wherein the restricting collar is fixed to and sleeved on the screw rod, the outer wall of the screw rod is further provided with a third rod body step, and the first restricting member is fixed to and clamped between the restricting collar and the third rod body step.

22. The electronic expansion valve of claim 20, wherein the first restricting member is configured as a bearing member, an inner ring of a bearing of the first restricting member is fixed to the outer wall of the screw rod, and an outer ring of the bearing of the first restricting member is in guiding fit with the inner wall of the stop seat.

23. The electronic expansion valve of claim 1, further comprising a first restricting member, wherein the first restricting member is configured as a bearing member, an outer ring of a bearing of the first restricting member is restricted by an inner wall of the stop seat, and an inner ring of the bearing of the first restricting member is stopped by an outer wall of the screw rod to prevent the screw rod from moving towards the valve port portion; an end of the first elastic member adjacent to the valve port portion abuts against the screw rod, and an other end of the first elastic member away from the valve port portion abuts against the inner ring of the bearing of the first restricting member.

24. The electronic expansion valve of claim 23, wherein an end of the stop seat away from the valve port portion is provided with a first stopping portion, and the outer ring of the bearing of the first restricting member ( is embedded between the first stopping portion and the stop seat.

25. The electronic expansion valve of claim 24, wherein the stop seat comprises a stop main body and a first connecting insert member, the stop main body is configured as an injection-molded member, an end of the first connecting insert member is embedded in the stop main body, and an other end of the first connecting insert member is connected to the first stopping portion by welding.

26. The electronic expansion valve of claim 24, wherein the stop seat further comprises a second connecting insert member, an end of the second connecting insert member is embedded in the stop main body, and an other end of the second connecting insert member is connected to the valve seat assembly by welding.

27. The electronic expansion valve of claim 1, further comprising a first restricting member, wherein the first restricting member is configured as a bearing member, an inner ring of a bearing of the first restricting member is fixed to an outer wall of the screw rod, an outer ring of the bearing of the first restricting member is stopped by an inner wall of the stop seat to prevent the screw rod from moving towards the valve port portion, an end of the first elastic member adjacent to the valve port portion abuts against the outer ring of the bearing of the first restricting member, and an other end of the first elastic member away from the valve port portion is directly or indirectly stopped by the inner wall of the stop seat.

28. The electronic expansion valve of claims 27 or 6, wherein a side of the stop seat away from the valve port portion is provided with a first stopping portion, and the first stopping portion is defined as a second restricting member (; and/or
the first stopping portion comprises an annular-shaped fixing ring, an inner circumference of the annular-shaped fixing ring surrounds a peripheral side of the screw rod, and an outer ring of the annular-shaped fixing ring is fixed to the inner wall of the stop seat.

29. The electronic expansion valve of claim 28, wherein the stop seat comprises a stop main body and a first connecting insert member, the stop main body is configured as an injection-molded member, an end of the first connecting insert member is embedded in the stop main body, and an other end of the first connecting insert member is connected to the annular-shaped fixing ring by welding.
